# EUROPÄISCHE PATENTSCHRIFT

(11) **EP 1 725 063 B1**
(45) Veröffentlichungstag und Bekanntmachung des Hinweises auf die Patenterteilung: **18.12.2013**
(21) Anmeldenummer: 06009944.7
(22) Anmeldetag: 15.05.2006
(51) Int. Cl.: H04M 3/42, H04M 3/436, H04W 4/02

(54) **Selektive (gefilterte) Übertragung von Kommunikationsinformationen an ein mobiles Endgerät in einem Mobilfunknetz in Abhängigkeit einer Funktionszustandsinformation des mobilen Endgeräts**
Selective (filtered) delivery of communications information to a mobile terminal in a mobile radio network based on functional status information of the mobile terminal
Transfert sélectif des informations de communications vers un terminal mobile dans un réseau de communications radio en fonction d'une information d'état de fonction du terminal mobile

(30) Priorität: 17.05.2005 DE 102005023329
(43) Veröffentlichungstag der Anmeldung: 22.11.2006
(60) Teilanmeldung: 10009407.7
(73) Patentinhaber: Vodafone Holding GmbH, 40213 Düsseldorf (DE)
(72) Erfinder: Rodrigues, Bruno, 40219 Düsseldorf (DE)
(74) Vertreter: Weisbrodt, Bernd

(56) Entgegenhaltungen:
- EP-A- 1 255 414
- EP-A2- 1 139 608
- WO-A-02/054739
- US-A- 5 930 700
- US-A- 5 933 778
- US-B1- 6 622 021
- SIEMENS: "Call Handling, IMSI Attach/Detach" SIEMENS - INFORMATION, 1995, Seiten 1-10, XP002397104
- HIENTZ M ET AL: "DER SHORT MESSAGE SERVICE. ÖEIN NEUER DIENST DER DIGITALEN MOBILKOMMUNIKATION", ITG FACHBERICHTE, VDE VERLAG, BERLIN, DE, no. 124, 1 September 1993 (1993-09-01), pages 517-526, XP000443970, ISSN: 0932-6022

## Beschreibung

Die vorliegende Erfindung betrifft ein Verfahren zum Betreiben eines in Mobilfunknetzen nutzbaren mobilen Endgerätes in einem Mobilfunknetz gemäß dem Oberbegriff des Anspruchs 1. Ferner betrifft die Erfindung ein Mobilfunksystem mit ein zellulares Mobilfunknetz mit einer hierarchischen Zellstruktur ausbildenden Komponenten, insbesondere gemäß dem GSM- und/oder UMTS-Funknetzstandard, und im Mobilfunknetz nutzbaren mobilen Endgeräten, welches zur Ausführung des erfindungsgemäßen Verfahrens ausgebildet ist. Darüber hinaus betrifft die vorliegende Erfindung ein zur Ausführung des erfindungsgemäßen Verfahrens ausgebildetes mobiles Endgerät zur Nutzung in Mobüfunknetzen.

Ein derartiges Verfahren ist beispielsweise aus der US 5,933,778 bekannt. Es wird ein System und ein Verfahren zur Bereitstellung von Telekommunikationsdiensten in einem Telekommunikationssystem, insbesondere einem Mobilfunksystem gemäß einem GSM-Standard beschrieben. Bei der Bereitstellung der Telekommunikationsdienste sollen für Weiterleitungsfunktionalitäten von für einen Teilnehmer eingehenden Anrufen persönliche Informationen des Teilnehmers berücksichtigt werden. Dazu hat der Teilnehmer zuvor ein entsprechendes Teilnehmerprofil mit Zeit- und Kontaktdaten zu erstellen bzw. einzugeben. Die Daten des Teilnehmerprofils werden dann von dem Teilnehmer in einer Datenbank seitens des Mobilfunksystems hinterlegt. Die hinterlegten Daten werden dann seitens des Mobilfunksystems in ein für eine Steuerung von Telekommunikationsdiensten in dem Mobilfunksystem geeignetes Format umgesetzt. In dem Teilnehmerprofil kann der Teilnehmer Informationen hinterlegen, wie zu bestimmten Zeiten mit eingehenden Anrufen allgemein, das heißt für alle Anrufe, und/oder im Besonderen, das heißt beispielsweise für Anrufe von bestimmten Teilnehmern, bezüglich Weiterleitungsfunktionalitäten, wie beispielsweise einer Durchstellung bzw. Ablehnung oder dergleichen, umgegangen werden soll.

Bei dem bisher bekannten Betreiben von mobilen Endgeräten, insbesondere Mobilfunktelefonen, in zellularen Mobilfuniknetzen mit einer hierarchischen Zellstruktur, insbesondere gemäß dem GSM- und/oder dem UMTS-Funknetzstandard, werden seitens betriebsbereiter und im Mobilfunknetz hinsichtlich des aktuellen Aufenthaltsortes in wenigstens einer Funkzelle des Mobilfunknetzes registrierter mobiler Endgeräte eingehende Kommunikationsinformationen wie Anrufe und/oder Mitteilungen eines Nachrichtendienstes des Mobilfunknetzes, beispielsweise SMS, MMS oder mittels sogenanntem Cellbroadcast versendete Informationen, in der Regel mit akustischen Signalen, beispielsweise sogenannten Klingeltönen, wiedergegeben, welche dem Nutzer des mobilen Endgerätes den Eingang derartiger Kommunikationsinformationen anzeigen beziehungsweise signalisieren.

Im täglichen Gebrauch entsprechender in Mobilfunknetzen nutzbarer mobiler Endgeräte sind zahlreiche Situationen gegeben, in denen die Wiedergabe von derartigen den Eingang der Kommunikationsinformationen anzeigenden akustischen Signale seitens des mobilen Endgerätes zwar störend ist beziehungsweise empfunden wird, insbesondere in Besprechungen, Vortragsveranstaltungen, Nachts während des Schlafes des Nutzers des mobilen Endgerätes oder dergleichen Situationen, allerdings ein Außerbetriebnehmen des mobilen Endgerätes, insbesondere durch ein Abschalten beziehungsweise Ausschalten des mobilen Endgerätes, aus Gründen eines wie auch immer gearteten Erreichbarkeitserfordemisses des Nutzers des mobilen Endgerätes nicht möglich beziehungsweise gewünscht ist. In der Regel ist bei in Mobilfunknetzen nutzbaren mobilen Endgeräten zu diesem Zwecke die Möglichkeit gegeben, die Wiedergabe von den Eingang von Kommunikationsinformationen anzeigenden akustischen Signalen zu unterdrücken, beispielsweise im Rahmen einer sogenannten "Stummschaltung", in der die akustische Wiedergabe von Signalen seitens des mobilen Endgerätes abgeschaltet beziehungsweise unterdrückt wird. Nachteilig bei einem Außerbetriebnehmen des mobilen Endgerätes als auch beim sogenannten "Stummschalten" desselben ist, dass der Nutzer des mobilen Endgerätes für diesen mitunter wichtige eingehende Kommunikationsinformationen nicht wahrnehmen kann. Darüber hinaus ist die Einstellbarkeit hinsichtlich einer Unterdrückung beziehungsweise Blockade des Eingangs von Kommunikationsinformationen für den Nutzer eines mobilen Endgerätes nicht beziehungsweise nur mit erheblichem Aufwand hinsichtlich entsprechender Bedieneingaben und ferner nur mit beschränktem Funktionsumfang ermöglicht.

Aus der US 6,622,021 B1 ist ein System und ein Verfahren zur Implementierung eines Beantwortungsdienstes in einem Telekommunikationsnetzwerk für Kurznachrichten oder E-Mails bekannt. Der Beantwortungsdienst beruht dabei auf Kalenderinformationen eines angerufenen Teilnehmers und kommt zum Einsatz, wenn der angerufene Teilnehmer nicht erreichbar ist.

Die WO 02/054739 A2 offenbart ein Verfahren zur Signalisierung eines abgelehnten Verbindungswunsches innerhalb eines Mobilfunknetzes, bei dem zur Signalisierung der Ablehnung eines Verbindungswunsches eine Textnachricht (SMS) mittels des Mobilfunknetzes von einer Speichereinrichtung, in der die Textnachricht (SMS) gespeichert ist, an die rufende Mobilstation übermittelt wird.

Aus der Veröffentlichung der Siemens AG auf den Seiten 1 bis 10 "Call Handling - IMSI Attach/Detach" aus dem Jahr 1995 sind sogenannte IMSI-Attach- und IMSI-Detach-Mechanismen bekannt, die in Mobilfunknetzen gemäß einem GSM-Funknetzstandard zum Einsatz kommen. Die IMSI-Attach und IMSI-Detach-Mechanismen umfassen dabei Prozeduren, die die mobilfunknetzseitige Handhabung von Anrufen und SMS für Teilnehmer eines Mobilfunknetzes steuern bzw. beeinflussen, wenn diese mit einem Endgerät und einer SIM im Mobilfunknetz erreichbar (IMSI attach) bzw. nicht erreichbar sind (IMSI detach). Ist das Endgerät mit SIM im Mobilfunknetz erreichbar (IMSI attach) so werden Anrufe und SMS dem Endgerät zugestellt. Ist das Endgerät mit SIM im Mobilfunknetz nicht erreichbar (IMSI detach) so kommen je nach Aktion verschiedene IMSI-Detach-Prozeduren zum Einsatz, die die mobilfunknetzseitige Handhabung von Anrufen und SMS steuern bzw. beeinflussen.

Die EP 1 255 414 A2 offenbart ein System, welches es einem Empfänger einer mittels SMS von einem Sender verschickten Nachricht ermöglicht, automatisch eine oder mehrere Antwortnachrichten an den Sender mittels SMS zu versenden.

Aus der Veröffentlichung des VDE Verlags, Berlin (Deutschland) "Der Short Message Service. Ein neuer Dienst der digitalen Mobilkommunikation", erschienen in dem ITG Fachbericht Nr. 124, Seite 517 bis 526 am 1. September 1993 ist bekannt, dass die Zustellung einer Kurznachricht bei momentaner Nichterreichbarkeit eines mobilen Endgerätes im Mobilfunknetz automatisch wiederholt wird, sobald der Teilnehmer wieder erreichbar ist, wozu spezielle Flags ausgewertet werden. Eine momentane Nichterreichbarkeit eines mobilen Endgerätes ist gegeben, wenn das mobile Endgerät außer Betrieb, die SIM gezogen oder das das mobile Endgerät im Funkschatten ist. Für den Fall, dass ein Mobilfunkanschluss bei einem eingehenden Anruf besetzt ist, das heißt also, dass das mobile Endgerät bereits für ein Gespräch genutzt wird, wird der eingehende Anruf zu einem Voice Mail System umgelenkt, welches die aufgesprochene Information speichert. Zudem erzeugt das Voice Mail System eine Kurznachricht, welche direkt an das mobile Endgerät übertragen wird.

Die US 5,930,700 beschreibt ein System und Verfahren, welches einem Nutzer ermöglicht, eingehende Telefonanrufe automatisch gemäß seiner Vorlieben zu verwalten. Dabei wird zwischen Anrufern mit einer hohen Priorität und Anrufern einer niedrigen Priorität unterschieden, so dass selektiv gemäß präferierter Einstellungen seitens des Nutzers Anrufe und/oder Mitteilungen übertragen werden. Über einen entgangenen Anruf kann der Nutzer informiert werden.

Aus der EP 1 139 608 A2 ist bekannt, dass anhand von gespeicherten Profilen eines Nutzers bestimmt werden kann, welche Art von Anrufen und/oder Nachrichten übermittelt werden. Dazu kann beispielsweise in einem Profil festgelegt werden, dass am Wochenende ausschließlich Sportnachrichten übermittelt werden. Diese in einem zentralen Profil hinterlegte Information dient dazu, ankommende Nachrichten derart zu filtern, dass in dem Profil gespeicherten "Filterregeln" Folge geleistet wird. Somit wird ein Nutzer beispielsweise unter der Woche oder beispielsweise während der Arbeit nicht von eintreffenden Sportnachrichten gestört.

Seitens des Standes der Technik ist nachteilig, dass im Falle einer vorübergehenden Nichterreichbarkeit eines betriebsbereiten und im Mobilfunknetz hinsichtlich des aktuellen Aufenthaltsortes in wenigstens einer Funkzelle des Mobilfunknetzes registrierten mobilen Endgerätes, beispielsweise aufgrund einer Störung und/oder Unterbrechung der Funkversorgung in einer Zelle des Mobilfunknetzes, wie sie insbesondere bei zumindest kurzfristigem Aufenthalt in einem Tunnel, einem Fahrstuhl, Keller oder dergleichen Ausfälle in der Funkversorgung aufweisenden Bereichen vorkommen können, entsprechende an das mobile Endgerät gerichtete Kommunikationsinformationen von diesem verpasst werden, da diese nicht zustellbar sind. Insbesondere bei von dem Nutzer des mobilen Endgerätes in der Regel abonnierten Kommunikationsinformationen in Form von mittels Cellbroadcast übertragenen Nachrichten eines thematisch kategorisierten Nachrichtendienstes eines Mobilfunknetzes, gehen in der Zeit der mangels Funkverbindung nicht gegebenen Erreichbarkeit des mobilen Endgerätes im Mobilfunknetz an dieses gerichtete Nachrichten verloren. Der Nutzer des mobilen Endgerätes verliert somit für ihn mitunter äußerst wichtige und für den Betreiber des Mobilfunknetzes als kostenpflichtige Leistung abrechenbare Nachrichten.

Vor diesem Hintergrund liegt der vorliegenden Erfindung die Aufgabe zugrunde, den Betrieb von in Mobilfunknetzen nutzbaren mobilen Endgeräten in Mobilfunknetzen unter Meidung der beschriebenen Nachteile derart zu verbessern, dass eine einfache und funktional umfangreiche Unterdrückung beziehungsweise Blockade des Eingangs von Kommunikationsinformationen komfortabel ermöglicht wird, insbesondere hinsichtlich weitergehender Nutzungen von Kommunikationsinformationen.

Zur technischen Lösung dieser Aufgabe wird mit der vorliegenden Erfindung ein Verfahren zum Betreiben eines in Mobilfunknetzen nutzbaren mobilen Endgerätes der eingangs genannten Art vorgeschlagen, welches durch die Merkmale des kennzeichnenden Teils des Anspruchs 1 gekennzeichnet ist.

Der Erfindung liegt die Erkenntnis zugrunde, dass durch Nutzung einer Funktionszustandsinformation eines mobilen Endgerätes seitens des Mobilfunknetzes eine umfangreichere und verbesserte Nutzung von an das mobile Endgerät gerichteter Kommunikationsinformationen ermöglicht wird. So ermöglicht eine erfindungsgemäße Nutzung von Funktionszustandsinformationen eines mobilen Endgerätes seitens des Mobilfunknetzes insbesondere eine selektive Weiterleitung von an das mobile Endgerät gerichteten Kommunikationsinformationen, beispielsweise eingehenden Anrufen und/oder Mitteilungen eines Nachrichtendienstes des Mobilfunknetzes in Abhängigkeit des Funktionszustandes des mobilen Endgerätes.

Erfindungsgemäß ist die Erfindung gekennzeichnet durch eine in Abhängigkeit von der Funktionszustandsinformation des mobilen Endgerätes gefiltert erfolgende Übertragung von an das mobile Endgerät gerichteter Kommunikationsinformationen. Erfindungsgemäß ist so bereits seitens des Mobilfunknetzes in Abhängigkeit von dem Funktionszustand des mobilen Endgerätes eine selektive Übertragung von Kommunikationsinformationen an das mobile Endgerät ermöglicht. So können in Abhängigkeit des Funktionszustandes des mobilen Endgerätes vorteilhafterweise nur bestimmte Kommunikationsinformationen und/oder nur Kommunikationsinformationen von bestimmten Teilnehmern und/oder Kommunikationsinformationen mit bestimmten Inhalten, welche vorteilhafterweise von dem Nutzer des mobilen Endgerätes vorgebbar sind, vorzugsweise hinsichtlich einer Wichtigkeit für den Nutzer des mobilen Endgerätes und/oder vorgebbarer beziehungsweise einstellbarer Schlüsselwörter, durchgestellt beziehungsweise zu diesem übertragen werden, während andere in Abhängigkeit von dem Funktionszustand des mobilen Endgerätes seitens des Mobilfunknetzes herausgefilterte Kommunikationsinformationen zumindest zunächst, das heißt während eines Bestehens des Funktionszustandes, nicht an das mobile Endgerät übertragen werden. Dadurch lässt sich der Funktionsumfang einer Unterdrückung beziehungsweise Blockade des Eingangs von Kommunikationsinformationen seitens des mobilen Endgerätes weiter steigern und insbesondere den individuellen Bedürfnissen des Nutzers des mobilen Endgerätes anpassen. Vorteilhafterweise ist die Filterung einstellbar, vorzugsweise mittels wenigstens einer seitens des mobilen Endgerätes auswählbaren Filterinformation, welche beispielsweise die Rufnummer von Teilnehmern in einem Telekommunikationsnetz oder dergleichen Adressinformationen von Teilnehmern umfasst. Anhand der Filterinformation wird dann vorteilhafterweise seitens des Mobilfunknetzes bei an das mobile Endgerät gerichteten Kommunikationsinformationen erfasst, ob entsprechende Kommunikationsinformationen von diesen Teilnehmern an das mobile Endgerät in Abhängigkeit von dem Funktionszustand des mobilen Endgerätes, welcher seitens des Mobilfunknetzes vorteilhafterweise eine entsprechende Funktionszustandsinformation nutzt, übertragen werden darf. Vorteilhafterweise wird die Filterinformation mit und/oder im Zusammenhang mit der Funktionszustandsinformation des mobilen Endgerätes seitens des Mobilfunknetzes erfasst, vorteilhafterweise seitens einer den Aufbau von Kommunikationsinformationen im Mobilfunknetz steuernden beziehungsweise an einer solchen Steuerung beteiligten Recheneinrichtung, vorzugsweise einer Datenbank wie das sogenannte HLR (HLR: Home Location Register).

Gemäß einer weiteren vorteilhaften Ausgestaltung der Erfindung unterliegt die Filterung zeit-, aufenthaltsort- und/oder kommunikationsinformationsabhängigen Vorgaben. So kann der Nutzer eines mobilen Endgerätes für die Filterung von an dieses gerichtete Kommunikationsinformationen Vorgaben machen, in denen festgelegt wird, wann, wo und/oder welche Art beziehungsweise von wem er Kommunikationsinformationen erhalten möchte. So ist beispielsweise nutzerseitig vorgebbar, dass Kommunikationsinformationen diesem nicht während der Nachtzeit, Besprechungen oder dergleichen Situationen zugehen können. In einer besonders vorteilhaften Ausgestaltung der Erfindung sind entsprechende Vorgaben mit seitens des mobilen Endgerätes nutzbaren beziehungsweise genutzten Anwendungen, welche Weck- und/oder Terminplanfunktionalitäten seitens des mobilen Endgerätes realisieren, kombinierbar beziehungsweise aus diesen heraus für entsprechende zeit-, aufenthaltsort- und/oder kommunikationsinformationsabhängige Vorgaben nutzbar.

In einer weiteren vorteilhaften Ausgestaltung der Erfindung erfolgt die Filterung seitens des Mobilfunknetzes. Dazu ist vorteilhafterweise seitens des Mobilfunknetzes eine eine entsprechende Filterung ermöglichende Einrichtung vorgesehen, welche für an das mobile Endgerät gerichtete Kommunikationsinformationen entsprechende zeit-, aufenthaltsort- und/oder kommunikationsinformationsabhängige Vorgaben berücksichtigend ausgebildet ist.

In einer weiteren besonders vorteilhaften Ausgestaltung der Erfindung werden in Abhängigkeit von der Funktionszustandsinformation des mobilen Endgerätes von der Übertragung an das mobile Endgerät herausgefilterte an das mobile Endgerät gerichtete Kommunikationsinformationen seitens des Mobilfunknetzes erfasst und bei Änderung der Funktionszustandsinformation des mobilen Endgerätes vom Mobilfunknetz in Abhängigkeit von der entsprechend geänderten Funktionszustandsinformation des mobilen Endgerätes an das mobile Endgerät übertragen. Dadurch wird erfindungsgemäß die Möglichkeit geschaffen, in Abhängigkeit von dem Funktionszustand des mobilen Endgerätes von der Übertragung an dieses herausgefilterte Kommunikationsinformationen dem Nutzer des mobilen Endgerätes zu einem späteren Zeitpunkt gesammelt zukommen zu lassen. Vorteilhafterweise sind dazu seitens des Mobilfunknetzes Einrichtungen vorgesehen, die entsprechende Kommunikationsinformationen für den Nutzer des mobilen Endgerätes speichern beziehungsweise zumindest zwischenspeichern, so dass diese bei entsprechender Funktionszustandsänderung seitens des mobilen Endgerätes, beispielsweise bei einer Wiedererreichbarkeit oder dergleichen Funktionszustandsänderung, an das mobile Endgerät übertragen werden können.

Eine bevorzugte Ausgestaltung der Erfindung ist gekennzeichnet durch eingehende Anrufe und/oder eingehende Mitteilungen eines Nachrichtendienstes des Mobilfunknetzes als Kommunikationsinformationen. Der Nachrichtendienst des Mobilfunknetzes ist vorteilhafterweise ein Kurzmitteilungsdienst (SMS) oder ein Multimedia-Mitteilungsdienst (MMS). Eine weitere vorteilhafte Ausgestaltung der Erfindung sieht vor, dass der Nachrichtendienst des Mobilfunknetzes mittels WAP oder XHTML auf das mobile Endgerät übertragbare Informationen umfasst. In einer weiteren vorteilhaften Ausgestaltung der Erfindung ist der Nachrichtendienst des Mobilfunknetzes ein Rundspruchdienst, vorzugsweise ein nach Funkzellen des Mobilfunknetzes individualisierbarer Rundspruchdienst (Cellbroadcast). In einer besonders bevorzugten Ausgestaltung der Erfindung beinhaltet der Nachrichtendienst Nachrichten in verschiedenen thematischen Kategorien, wobei die Kategorien seitens des mobilen Endgerätes auswählbar und/oder vorgebbar sind. Eine konkrete Ausgestaltung der Erfindung sieht Kategorien mit ereignisgesteuerten Inhalten vor, beispielsweise Informationen über sportliche Veranstaltungen wie Spielstände von Fußballspielen oder dergleichen ereignisgesteuerter Informationen.

In einer weiteren besonders vorteilhaften Ausgestaltung der Erfindung erfolgt die Filterung eingehender Anrufe und/oder eingehender Mitteilungen eines Nachrichtendienstes des Mobilfunknetzes als Kommunikationsinformationen hinsichtlich einer Teilnehmerkennung des Anrufers und/oder Mitteilungssenders im Mobilfunknetz, vorzugsweise anhand der MSISDN (MSISDN: Mobile Subscriber ISDN (ISDN: Integrated Services Digital Network)) und/oder IMSI (IMSI: International Mobile Subscriber Identification).

Vorteilhafterweise wird die Funktionszustandsinformation des mobilen Endgerätes und/oder die Filterinformation für die Übertragung von an das mobile Endgerät gerichteter Kommunikationsinformationen zur Erfassung seitens des Mobilfunknetzes von dem mobilen Endgerät an das Mobilfunknetz übertragen, vorzugsweise mit einem Nachrichtendienst des Mobilfunknetzes, besonders bevorzugt mittels SMS. In einer weiteren vorteilhaften Ausgestaltung der Erfindung wird die Funktionszustandsinformation des mobilen Endgerätes automatisch seitens des Mobilfunknetzes erfasst, vorteilhafterweise im Rahmen der einen Verbindungsaufbau zwischen dem mobilen Endgerät und dem Mobilfunknetz initiierenden und regelnden Protokollen gemäß dem jeweiligen Funknetzstandart des Mobilfunknetzes. Erfindungsgemäß erfolgt die Erfassung der Funktionszustandsinformation des mobilen Endgerätes seitens des Mobilfunknetzes im Zusammenhang mit der Registrierung des aktuellen Aufenthaltsortes des mobilen Endgerätes in der wenigstens einen Funkzelle der Funkzellen des Mobilfunknetzes.

Gemäß einer weiteren besonders vorteilhaften Ausgestaltung der Erfindung wird die Funktionszustandsinformation des mobilen Endgerätes an das mobile Endgerät Kommunikationsinformationen richtenden Teilnehmern von dem Mobilfunknetz mitgeteilt. Eine weitere vorteilhafte Ausgestaltung der Erfindung sieht vor, dass die Funktionszustandsinformation des mobilen Endgerätes an das mobile Endgerät Kommunikationsinformationen richtenden Teilnehmern von dem Mobilfunknetz mitgeteilt wird, sofern Kommunikationsinformationen dieser Teilnehmer von der Übertragung an das mobile Endgerät seitens des Mobilfunknetzes herausgefiltert wurden. Vorteilhafterweise wird die Funktionszustandsinformation des mobilen Endgerätes dem jeweiligen Teilnehmer mittels eines Nachrichtendienstes des Mobilfunknetzes mitgeteilt. Die Mitteilung an den jeweiligen Teilnehmer ist dabei vorteilhafterweise einstellbar und/oder vorgebbar, vorzugsweise nutzerindividuell seitens des mobilen Endgerätes. So kann einem entsprechendem Teilnehmer vorteilhafterweise mittels eines Nachrichtensdienstes des Mobilfunknetzes, vorzugsweise mittels eines Kurzmitteilungsdienstes (SMS) oder einem Multimedia-Mitteilungsdienst (MMS), beispielsweise mitgeteilt werden, dass der entsprechend nicht erreichbare Nutzer eines mobilen Endgerätes sich derzeit in einer Besprechung befindet, schläft, nicht gestört werden will, oder dergleichen Nichterreichbarkeitsgrund gegeben ist. Dabei sind dem jeweiligen Teilnehmer vorteilhafterweise nutzerindividuelle Informationen bezüglich der Nichterreichbarkeit mitteilbar, welche der Nutzer des mobilen Endgerätes entsprechend nutzer- und/oder teilnehmerindividuell vorgeben beziehungsweise auswählen kann.

In einer weiteren vorteilhaften Ausgestaltung der Erfindung ist die Funktionszustandsinformation des mobilen Endgerätes seitens des mobilen Endgerätes einstellbar. Vorteilhafterweise erfolgt die Einstellung der Funktionszustandsinformation des mobilen Endgerätes durch Betätigung wenigstens einer Taste seitens des mobilen Endgerätes, welche vorzugsweise ausschließlich dazu funktionalisiert ist. In einer weiteren konkreten Ausgestaltung der Erfindung weist das mobile Endgerät ein aus wenigstens zwei relativ zueinander anordbaren Gehäuseteilen bestehendes Gehäuse auf und erfolgt die Einstellung der Funktionszustandsinformation des mobilen Endgerätes durch wenigstens eine relative Bewegung der Gehäuseteile des Gehäuses zueinander zwischen wenigstens zwei Positionen, vorzugsweise durch Verschwenken, Verdrehen und/oder Verschieben der Gehäuseteile des Gehäuses zueinander. Durch diese Maßnahmen hinsichtlich der Betätigung zur Einstellung von Funktionszuständen beziehungsweise daraus ermittelbaren Funktionszustandsinformationen in Form von Signalen für das Mobilfunknetz können endgeräteseitig aufwändige Einstellungen durch Tasteneingaben in ansonsten erforderlichen aufwändigen Menüs beziehungsweise Menüführungen vorteilhafterweise entfallen, wodurch die Bedienbarkeit hinsichtlich einer erfindungsgemäßen Nutzung des Verfahrens beziehungsweise des Endgerätes weiter vereinfacht wird.

Zur technischen Lösung der eingangs genannten Aufgabe wird mit der vorliegenden Erfindung ferner ein Mobilfunksystem mit ein zellulares Mobilfunknetz mit einer hierarchischen Zellstruktur ausbildenden Komponenten, insbesondere gemäß dem GSM- und/oder UMTS-Funknetzstandard, und mit in dem Mobilfunknetz nutzbaren mobilen Endgeräten bereit gestellt, bei dem die das Mobilfunknetz ausbildenden Komponenten zur Ausführung eines erfindungsgemäßen Verfahrens ausgebildet sind.

Ferner wird zur technischen Lösung der eingangs genannten Aufgabe ein mobiles Endgerät zur Nutzung in Mobilfunknetzen bereitgestellt, welches zur Ausführung eines erfindungsgemäßen Verfahrens in einem erfindungsgemäßen Mobilfunksystem ausgebildet ist.

Vorteilhafterweise weist das mobile Endgerät ein eine Einstellung der Funktionszustandsinformation und/oder der Filterinformation ermöglichendes, seitens des mobilen Endgerätes ausführbares Anwendungsprogramm auf. In einer besonders bevorzugten Ausgestaltung der Erfindung ist ein entsprechendes Anwendungsprogramm seitens eines mobilen Endgerätes nachrüstbar, so dass bei entsprechender Funktionalität seitens des Mobilfunknetzes mobile Endgeräte durch Aufspielen eines entsprechenden Anwendungsprogramms auf diese zur erfindungsgemäßen Ausführung des Verfahrens funktionalisierbar sind.

In einer weiteren Ausgestaltung der Erfindung weist das mobile Endgerät wenigstens eine die Einstellung der Funktionszustandsinformation des mobilen Endgerätes durch Betätigung ermöglichende Taste auf, welche vorzugsweise ausschließlich dazu funktionalisiert ist. In einer bevorzugten Ausgestaltung der Erfindung weist das mobile Endgerät ein aus wenigstens zwei relativ zueinander anordbaren Gehäuseteilen bestehendes Gehäuse auf, wobei die Einstellung der Funktionszustandsinformation durch wenigstens eine relative Bewegung der Gehäuseteile des Gehäuses zueinander zwischen wenigstens zwei Positionen vornehmbar ist, vorzugsweise durch Verschwenken, Verdrehen und/oder Verschieben der Gehäuseteile des Gehäuses zueinander.

Vorteilhafterweise ist das mobile Endgerät ein in Mobilfunknetzen betreibbares Mobilfunktelefon, welches vorzugsweise wenigstens eine Anzeigeeinrichtung zur optischen und/oder akustischen Wiedergabe von Informationen und wenigstens eine Eingabeeinrichtung zur Erfassung von optischen und/oder akustischen Informationen aufweist.

Weitere Einzelheiten, Merkmale und Vorteile der Erfindung werden nachfolgend anhand des in der Figur der Zeichnung dargestellten Ausführungsbeispiels der Erfindung näher erläutert. Dabei zeigt:

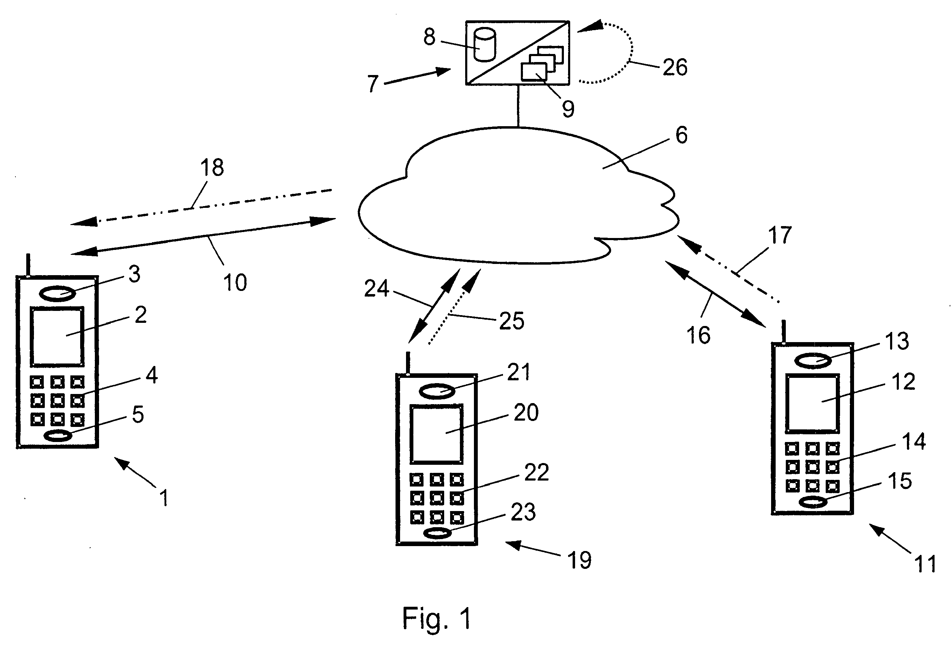

- Fig. 1: in einer Prinzipdarstellung ein erfindungsgemäßes Mobilfunksystem und ein erfindungsgemäßes mobiles Endgerät, welche zur Ausführung des erfindungsgemäßen Verfahrens ausgebildet sind.

Das in Fig. 1 gezeigte Mobilfunksystem besteht aus einem digitalen zellularen Mobilfunknetz 6 mit einer eine hierarchischen Zellstruktur ausbildenden, in Fig. 1 nicht explizit dargestellten Komponenten und aus in dem Mobilfunknetz 6 nutzbaren mobilen Endgeräten 1, 11 und 19, welche vorliegend als in dem Mobilfunknetz 6 betreibbare Mobilfunktelefone 1, 11 und 19 ausgebildet sind. Die Mobilfunktelefone 1, 11 und 19 sind vorliegend in dem Mobilfunknetz 6 zu Kommunikationszwecken nutzbar. Die Komponenten des Mobilfunknetzes 6 werden dabei von einem Mobilfunknetzbetreiber 7 unterhalten und betrieben, welche ebenfalls zu den die das Mobilfunknetz 6 ausbildenden Komponenten gehören.

Die Mobilfunktelefone 1, 11 und 19 weisen jeweils eine als Display ausgebildete optische Anzeigeeinrichtung 2, 12 beziehungsweise 20, einen Lautsprecher als akustische Anzeigeeinrichtung 3, 13 beziehungsweise 21, eine mehrere Tasten aufweisende Tastatur, welche als Eingabeeinrichtung 4, 14 beziehungsweise 22 zur Erfassung von Informationen und/oder Bedieneingaben dient, und ein als Eingabeeinrichtung zur Erfassung von akustischen Informationen dienendes Mikrofon 5, 15 beziehungsweise 23 auf.

Zur Nutzung der Mobilfunktelefone 1, 11 und 19 in dem Mobilfunknetz 6 sind diese hinsichtlich ihres aktuellen Aufenthaltsortes in den von dem Mobilfunknetz 6 bereitgestellten Funkzellen, in welchen sich die Mobilfunktelefone 1, 11 und 19 entsprechend aufhalten und eine Funkverbindung zwischen dem jeweiligen Mobilfunktelefon 1, 11 beziehungsweise 19 und dem Mobilfunknetz 6 ermöglicht ist, registriert. Die Registrierung der jeweiligen Mobilfunktelefone 1, 11 beziehungsweise 19 in den jeweiligen Funkzellen des Mobilfunknetzes 6 sind in Fig. 1 durch die mit dem Bezugszeichen 10, 16 beziehungsweise 24 versehenden Doppelpfeile symbolisch dargestellt. Die Registrierungen 10, 16 und 24 umfassen dabei die für den jeweiligen Funknetzstandard des Mobilfunknetzes 6 üblichen Informationsaustauschverbindungen und deren entsprechende Protokolle, insbesondere hinsichtlich Registrierung der Mobilfunktelefone in den jeweiligen Funkzellen des Mobilfunknetzes und deren Registrierung seitens der von dem Mobilfunknetzbetreiber 7 unterhaltenden Komponenten, insbesondere dem sogenannten HLR und/oder VLR (HLR: Home Location Register; VLR: Visitor Location Register).

Vorliegend sind die das Mobilfunknetz 6 ausbildenden Komponenten symbolisch durch seitens des Mobilfunknetzbetreibers 7 entsprechend vorgesehene Recheneinrichtungen mit Datenbanken 8, insbesondere dem HLR und/oder dem VLR, sowie seitens entsprechender Recheneinrichtungen in Form von Programmen laufenden Anwendungen 9 dargestellt. Die Recheneinrichtungen mit Datenbanken und/oder Anwendungsprogrammen 8 beziehungsweise 9 sind dabei entsprechend seitens der die Funkzellen ausbildenden Komponenten des Mobilfunknetzes 6 und deren Hilfseinrichtungen vorgesehen, beispielsweise den sogenannten Basisstationen und dergleichen Einrichtungen und/oder Komponenten des Mobilfunknetzes 6, welches vorliegend gemäß dem GSM-und/oder UMTS-Funknetzstandard ausgebildet ist.

Vorliegend sind seitens des Mobilfunknetzes 6 in entsprechenden von dem Mobilfunknetzbetreiber 7 bereitgestellten Recheneinrichtungen mit Datenbanken 8 und/oder Anwendungen 9 Funktionszustandsinformationen des betriebsbereiten und in Mobilfunknetz 6 registrierten Mobilfunktelefons 1 erfasst. Die in der Datenbank 8 mittels einer entsprechenden Anwendung 9 seitens des Mobilfunknetzbetreibers 7 des Mobilfunknetzes 6 im Rahmen der Registrierung 10 des Mobilfunktelefons 1 im Mobilfunknetz 6 erfasste Funktionszustandsinformation filtert dabei vorliegend an das Mobilfunktelefon 1 gerichtete Kommunikationsinformationen entsprechend dem von dem Nutzer des Mobilfunktelefons 1 durch die Funktionszustandsinformationen gemachten Vorgaben heraus.

In dem vorliegenden Beispiel werden dementsprechend von dem Mobilfunktelefon 11 über das Mobilfunknetz 6 an das Mobilfunktelefon 1 gerichtete Kommunikationsinformationen 17, vorliegend ein Anruf, bei entsprechender Erreichbarkeit des Mobilfunktelefons 1 im Mobilfunknetz 6 entsprechend durchgestellt beziehungsweise übertragen, wie in Fig. 1 anhand des entsprechend mit dem Bezugszeichen 18 versehenden Pfeils dargestellt. Der Nutzer des Mobilfunktelefons 1 hat entsprechend des von ihm gewählten Funktionszustandes beziehungsweise der entsprechend erzeugten Funktionszustandsinformation seitens des Mobilfunknetzes 6 in der Datenbank 8 beziehungsweise der Anwendung 9 die Information hinterlegt, dass von dem Mobilfunktelefon 11 kommende Anrufe als Kommunikationsinformationen 17 durchgestellt werden dürfen.

Für von dem Nutzer des Mobilfunktelefons 19 an das Mobilfunktelefon 1 über das Mobilfunknetz 6 gerichtete Kommunikationsinformationen 25 hat der Nutzer des Mobilfunktelefons 1 im Rahmen der seitens des Mobilfunknetzbetreibers 7 des Mobilfunknetzes 6 in entsprechenden Anwendungen 9 mit Datenbanken 8 zusammen mit der Funktionszustandsinformation hinterlegt, dass in dem entsprechenden Funktionszustand des Mobilfunktelefons 1 entsprechende Kommunikationsinformationen 25 des Mobilfunktelefons 19 nicht an das Mobilfunktelefon 1 übertragen, dass heißt zugestellt beziehungsweise durchgestellt werden sollen. Dementsprechend werden von dem Mobilfunktelefon 19 an das Mobilfunktelefon 1 über das Mobilfunknetz 6 gerichtete Kommunikationsinformationen seitens entsprechender Einrichtungen 8, 9 des Mobilfunknetzbetreibers 7 durch Zwischenspeichern der Kommunikationsinformationen 25 erfasst, wie in Fig. 1 anhand des mit 26 gekennzeichneten Pfeils symbolisch dargestellt.

Bei Änderung des Funktionszustandes des Mobilfunktelefons 1 und dessen Erfassung, vorliegend im Rahmen der regelmäßig erfolgenden Registrierung 10 des Aufenthaltsortes des Mobilfunktelefons 2 im Mobilfunknetz 6, wird die entsprechend zwischengespeicherte Kommunikationsinformation 26 dann von dem Mobilfunknetzbetreiber 7 beziehungsweise den entsprechenden Einrichtungen 8 beziehungsweise 9 über das Mobilfunknetz 6 übertragen und entsprechend wiedergegeben.

Die Nichtübertragbarkeit der Kommunikationsinformationen 25 an das Mobilfunktelefon 1 aufgrund des von dem Nutzer des Mobilfunktelefons 1 gewählten Funktionszustandes wird vorliegend dem Mobilfunktelefon 19 in Form einer als Kommunikationsinformation dienenden SMS von dem Mobilfunknetzbetreiber 7 beziehungsweise den entsprechenden Anwendungen 8 beziehungsweise 9 über das Mobilfunknetz 6 mitgeteilt. Vorteilhafterweise ist diese Benachrichtigung des Nutzers des Mobilfunktelefons 19 von dem Nutzer des Mobilfunktelefons 1 im Rahmen einer Vorgabe der Funktionszustandsinformationen und/oder deren Handhabung im Rahmen einer Filterung hinsichtlich des Inhaltes der Kommunikationsinformation vorgebbar beziehungsweise einstellbar. Vorteilhafterweise sind entsprechende von dem Mobilfunknetzbetreiber 7 für den Nutzer des Mobilfunktelefons 1 entsprechend an von der Übertragung an das Mobilfunktelefon 1 entsprechend dem Funktionszustand desselben herausgefilterten Kommunikationspartnern beziehungsweise deren Mobilfunktelefonen 19 als entsprechende Sonderdienstleistung des Mobilfunknetzbetreibers kostenpflichtig abrechenbar, beispielsweise als SMS.

In einer besonders bevorzugten Ausgestaltung der Erfindung wird die Berücksichtigung der Funktionszustandsinformation des Mobilfunktelefons 1 für von dem Mobilfunknetzbetreiber 7 an dieses über das Mobilfunknetz 6 übertragene, von dem Nutzer des Mobilfunktelefons 1 entsprechend abonnierte, thematisch kategorisierte Nachrichten, welche von dem Mobilfunknetzbetreiber 7 vorzugsweise mittels GPRS (GPRS: General Packet Radio Service) übertragen werden, genutzt. Hat der Nutzer des Mobilfunktelefons 1 entsprechende Nachrichtendienste des Mobilfunknetzbetreibers 7 abonniert und befindet sich das Mobilfunktelefon 1 in einem Funktionszustand, in welchem entsprechende Nachrichten des Nachrichtendienstes nicht seitens des Mobilfunktelefons 1 eingehen sollen, beispielsweise im sogenannten "Schlafmodus" beispielsweise während der Nacht, so wird entsprechend der in diesem Funktionszustand dem Mobilfunknetz 6 beziehungsweise dem Mobilfunknetzbetreiber mitgeteilten Funktionszustandsinformation des Mobilfunktelefon 1 die Übertragung entsprechender Nachrichten auf das Mobilfunktelefon 1 unterbrochen und die entsprechenden Nachrichten seitens geeigneter Anwendungen beziehungsweise Datenbanken 8 und 9 des Mobilfunknetzbetreibers 7 bis zur Änderung des entsprechenden Funktionszustandes des Mobilfunktelefons 1 zwischengespeichert, ähnlich der Zwischenspeicherung der Kommunikationsinformationen 26 des von dem Mobilfunktelefon 19 an das Mobilfunktelefon 1 gerichteten Kommunikationsinformation 25.

Bei dem vorliegend dargestellten Ausführungsbeispiel ist eine Änderung einer Funktionszustandsinformation vorteilhafterweise schon bereits bei einer vorübergehenden Nichterreichbarkeit des Mobilfunktelefons 1 im Mobilfunknetz 6 gegeben, beispielsweise wenn dieses sich vorübergehend in einem Fahrstuhl, einem Tunnel oder dergleichen Einrichtungen, Gebäude und/oder Orte befindet, in den das Mobilfunktelefon 1 keine Verbindung zu der entsprechenden Basisstation des Mobilfunknetzes 6 aufbauen kann. Eine entsprechende Erfassung dieser Funktionszustandsinformationen erfolgt dabei vorteilhafterweise im Rahmen der Registrierung 10 des Mobilfunktelefons 1 im Mobilfunknetz 6 durch entsprechendes Anmelden des Mobilfunktelefons 1 seitens der jeweiligen die Funkzellen bereitstellenden Basisstation des Mobilfunknetzes 6.

Die in der Fig. der Zeichnung dargestellten und im Zusammenhang mit dieser beschriebenen Ausführungsbeispiele der Erfindung dienen lediglich der Erläuterung der Erfindung und sind für diese nicht beschränkend.

### Bezugszeichenliste

- 1: mobiles Endgerät/Mobilfunktelefon
- 2: Anzeigeeinrichtung/Display
- 3: Anzeigeeinrichtung/Lautsprecher
- 4: Eingabeeinrichtung/Tastatur
- 5: Eingabeeinrichtung/Mikrofon
- 6: Mobilfunknetz
- 7: Mobilfunknetzbetreiber
- 8: Recheneinrichtung/Datenbank
- 9: Recheneinrichtung/Anwendung
- 10: Registrierung mobiles Endgerät (1)
- 11: mobiles Endgerät/Mobilfunktelefon
- 12: Anzeigeeinrichtung/Display
- 13: Anzeigeeinrichtung/Lautsprecher
- 14: Eingabeeinrichtung/Tastatur
- 15: Eingabeeinrichtung/Mikrofon
- 16: Registrierung mobiles Endgerät (11)
- 17: Kommunikationsinformation mobiles Endgerät (11)
- 18: Zu- bzw. Durchstellung Kommunikationsinformation (17)
- 19: mobiles Endgerät/Mobilfunktelefon
- 20: Anzeigeeinrichtung/Display
- 21: Anzeigeeinrichtung/Lautsprecher
- 22: Eingabeeinrichtung/Tastatur
- 23: Eingabeeinrichtung/Mikrofon
- 24: Registrierung mobiles Endgerät (19)
- 25: Kommunikationsinformation mobiles Endgerät (19)
- 26: Zwischenspeicherung Kommunikationsinformation (25)

## Patentansprüche

1. Verfahren zum Betreiben eines in Mobilfunknetzen (6) nutzbaren mobilen Endgerätes (1, 11, 19) in einem Mobilfunknetz (6),
wobei
seitens eines Mobilfunknetzes (6) wenigstens eine seitens des Nutzers des mobilen Endgerätes (1) vorgebbare Funktionszustandsinformation eines betriebsbereiten und im Mobilfunknetz (6) hinsichtlich des aktuellen Aufenthaltsortes in wenigstens einer Funkzelle des Mobilfunknetzes (6) registrierten mobilen Endgerätes (1) erfasst und für eine Übertragung von an das mobile Endgerät (1) gerichtete Kommunikationsinformationen (17, 18, 25, 26) genutzt wird und wobei
eine in Abhängigkeit von der Funktionszustandsinformation des mobilen Endgerätes (1) gefiltert erfolgende Übertragung von an das mobile Endgerät (1) gerichteter Kommunikationsinformationen (17, 18, 25, 26) gegeben ist,
**dadurch gekennzeichnet, dass**
die Erfassung der Funktionszustandsinformation des mobilen Endgerätes (1) seitens des Mobilfunknetzes (6) im Zusammenhang mit der Registrierung (10) des aktuellen Aufenthaltsortes des mobilen Endgerätes (1) in der wenigstens einen Funkzelle des Mobilfunknetzes (6) erfolgt und dass
in Abhängigkeit von der seitens des Nutzers des mobilen Endgerätes (1) vorgebbaren Funktionszustandsinformation von der Übertragung an das mobile Endgerät (1) herausgefilterte an das mobile Endgerät (1) gerichtete Kommunikationsinformationen (25, 26) seitens des Mobilfunknetzes (6) erfasst werden und
in Abhängigkeit des Funktionszustandes des mobilen Endgerätes (1) entsprechend der seitens des Nutzers des mobilen Endgerätes (1) vorgebbaren Funktionszustandsinformation Kommunikations-informationen mit bestimmten Inhalten, welche von dem Nutzer des mobilen Endgerätes (1) vorgebbar sind, zu dem mobilen Endgerät (1) übertragen werden, während andere in Abhängigkeit von dem Funktionszustand des mobilen Endgerätes (1) entsprechend der seitens des Nutzers des mobilen Endgerätes (1) vorgebbaren Funktionszustandsinformation seitens des Mobilfunknetzes (6) herausgefilterte Kommunikationsinformationen zumindest zunächst, das heißt während eines Bestehens des Funktionszustandes des mobilen Endgerätes (1), nicht an das mobile Endgerät (1) übertragen werden,
wobei die Vorgabe von Kommunikationsinformationen mit bestimmten Inhalten hinsichtlich einer Wichtigkeit für den Nutzer des mobilen Endgerätes (1) und/oder hinsichtlich vorgebbarer beziehungsweise einstellbarer Schlüsselwörter erfolgt.

2. Verfahren nach Anspruch 1, **dadurch gekennzeichnet, dass** die Filterung einstellbar ist.

3. Verfahren nach Anspruch 2, **dadurch gekennzeichnet, dass** die Filterung mittels wenigstens einer seitens des mobilen Endgerätes (1) auswählbaren Filterinformation einstellbar ist.

4. Verfahren nach Anspruch 3, **dadurch gekennzeichnet, dass** die Filterinformation mit der Funktionszustandsinformation des mobilen Endgerätes (1) und/oder im Zusammenhang mit der Funktionszustandsinformation des mobilen Endgerätes (1) seitens des Mobilfunknetzes (6) erfasst wird.

5. Verfahren nach einem der Ansprüche 1 bis 4, **dadurch gekennzeichnet, dass** die Filterung zeit-, aufenthaltsort- und/oder kommunikationsinformationsabhängigen Vorgaben unterliegt.

6. Verfahren nach einem der Ansprüche 1 bis 5, **dadurch gekennzeichnet, dass** die Filterung seitens des Mobilfunknetzes (6) erfolgt.

7. Verfahren nach einem der Ansprüche 1 bis 6, **gekennzeichnet durch** eingehende Anrufe und/oder eingehende Mitteilungen eines Nachrichtendienstes des Mobilfunknetzes (6) als Kommunikationsinformationen (17, 18, 25, 26).

8. Verfahren nach Anspruch 7, **dadurch gekennzeichnet, dass** der Nachrichtendienst des Mobilfunknetzes (6) ein Kurzmitteilungsdienst (SMS) oder ein Multimedia-Mitteilungsdienst (MMS) ist.

9. Verfahren nach Anspruch 7, **dadurch gekennzeichnet, dass** der Nachrichtendienst des Mobilfunknetzes (6) mittels WAP oder XHTML auf das mobile Endgerät (1) übertragbare Informationen umfasst.

10. Verfahren nach Anspruch 7, **dadurch gekennzeichnet, dass** der Nachrichtendienst des Mobilfunknetzes (6) ein nach Funkzellen des Mobilfunknetzes (6) individualisierbarer Rundspruchdienst (Cellbroadcast) ist.

11. Verfahren nach Anspruch 9 oder Anspruch 10, **dadurch gekennzeichnet, dass** der Nachrichtendienst Nachrichten in verschiedenen thematischen Kategorien beinhaltet, wobei die Kategorien seitens des mobilen Endgerätes (1) auswählbar und/oder vorgebbar sind.

12. Verfahren nach einem der Ansprüche 7 bis 11, **dadurch gekennzeichnet, dass** die Filterung eingehender Anrufe und/oder eingehender Mitteilungen eines Nachrichtendienstes des Mobilfunknetzes (1) als Kommunikationsinformationen (18, 26) hinsichtlich einer Teilnehmererkennung (MSISDN oder IMSI) des Anrufers und/oder Mitteilungssenders (11, 19) im Mobilfunknetz (6) erfolgt.

13. Verfahren nach einem der Ansprüche 1 bis 12, **dadurch gekennzeichnet, dass** die Funktionszustandsinformation des mobilen Endgerätes (1) und/oder die Filterinformation für die Übertragung von an das mobile Endgerät (1) gerichteter Kommunikationsinformationen (17, 18, 25, 26) zur Erfassung seitens des Mobilfunknetzes (6) von dem mobilen Endgerät (1) an das Mobilfunknetz (6) übertragen wird.

14. Verfahren nach einem der Ansprüche 1 bis 13, **dadurch gekennzeichnet, dass** die Funktionszustandsinformation des mobilen Endgerätes (1) an das mobile Endgerät (1) Kommunikationsinformationen (17, 25) richtenden Teilnehmern (11, 19) von dem Mobilfunknetz (6) mitgeteilt wird.

15. Verfahren nach einem der Ansprüche 1 bis 14, **dadurch gekennzeichnet, dass** die Funktionszustandsinformation des mobilen Endgerätes (1) an das mobile Endgerät (1) Kommunikationsinformationen (17, 25) richtenden Teilnehmern (11, 19) von dem Mobilfunknetz (6) mitgeteilt wird, sofern deren Kommunikationsinformationen (17, 18) herausgefiltert wurden.

16. Verfahren nach Anspruch 14 oder Anspruch 15, **dadurch gekennzeichnet, dass** die Funktionszustandsinformation des mobilen Endgerätes (1) dem jeweiligen Teilnehmer (11) mittels eines Nachrichtendienstes des Mobilfunknetzes (6) mitgeteilt wird.

17. Verfahren nach einem der Ansprüche 14 bis 16, **dadurch gekennzeichnet, dass** die Mitteilung an den Teilnehmer (11) einstellbar und/oder vorgebbar ist.

18. Verfahren nach Anspruch 17, **dadurch gekennzeichnet, dass** die Mitteilung an den Teilnehmer (11) nutzerindividuell seitens des mobilen Endgerätes (1) einstellbar und/oder vorgebbar ist.

19. Verfahren nach einem der Ansprüche 14 bis 18, **dadurch gekennzeichnet**, das der Nachrichtendienst des Mobilfunknetzes (6) ein Kurzmitteilungsdienst (SMS) oder ein Multimedia-Mitteilungsdienst (MMS) ist.

20. Verfahren nach einem der Ansprüche 1 bis 19, **dadurch gekennzeichnet, dass** die Funktionszustandsinformation des mobilen Endgerätes (1) seitens des mobilen Endgerätes (1) einstellbar ist.

21. Verfahren nach Anspruch 20, **dadurch gekennzeichnet, dass** die Einstellung der Funktionszustandsinformation des mobilen Endgerätes (1) durch Betätigung wenigstens einer ausschließlich dazu funktionalisierten Taste seitens des mobilen Endgerätes (1) erfolgt.

22. Verfahren nach Anspruch 20 oder Anspruch 21, **dadurch gekennzeichnet, dass** das mobile Endgerät (1) ein aus wenigstens zwei relativ zueinander anordbaren Gehäuseteilen bestehendes Gehäuse aufweist und die Einstellung der Funktionszustandsinformation des mobilen Endgerätes (1) durch wenigstens eine relative Bewegung der Gehäuseteile des Gehäuses zueinander zwischen wenigstens zwei Positionen durch Verschwenken, Verdrehen und/oder Verschieben der Gehäuseteile des Gehäuses zueinander erfolgt.

23. Mobilfunksystem mit ein zellulares Mobilfunknetz (6) mit einer hierarchischen Zellstruktur ausbildenden Komponenten (7, 8, 9), insbesondere gemäß dem GSM- und/oder UMTS-Funknetzstandard, und mit in dem Mobilfunknetz (6) nutzbaren mobilen Endgeräten (1, 11, 19), **dadurch gekennzeichnet, dass** die das Mobilfunknetz (6) ausbildenden Komponenten (7, 8, 9) zur Ausführung jedes einzelnen seitens des Mobilfunknetzes (6) durchzuführenden Verfahrensschrittes eines Verfahrens nach einem oder mehreren der Ansprüche 1 bis 22 ausgebildet sind.

24. Mobiles Endgerät (1) zur Nutzung in Mobilfunknetzen (6), **dadurch gekennzeichnet, dass** dieses zur Ausführung jedes einzelnen seitens des Endgerätes (1) durchzuführenden Verfahrensschrittes eines Verfahrens nach einem oder mehreren der Ansprüche 1 bis 22 in einem Mobilfunksystem nach Anspruch 23 ausgebildet ist.

25. Mobiles Endgerät (1) nach Anspruch 24, **dadurch gekennzeichnet, dass** dieses ein seitens des mobilen Endgerätes (1) ausführbares Anwendungsprogramm aufweist, welches eine Einstellung der Funktionszustandsinformation und/oder der Filterinformation ermöglicht.

26. Mobiles Endgerät (1) nach Anspruch 24 oder Anspruch 25, **gekennzeichnet durch** wenigstens eine eine Einstellung der Funktionszustandsinformation **durch** Betätigung ermöglichende, ausschließlich dazu funktionalisierte Taste.

27. Mobiles Endgerät (1) nach einem der Ansprüche 24 bis 26, **dadurch gekennzeichnet, dass** dieses ein aus wenigstens zwei relativ zueinander anordbaren Gehäuseteilen bestehendes Gehäuse aufweist, wobei die Einstellung der Funktionszustandsinformation durch wenigstens eine relative Bewegung der Gehäuseteile des Gehäuses zueinander zwischen wenigstens zwei Positionen durch Verschwenken, Verdrehen und/oder Verschieben der Gehäuseteile des Gehäuses zueinander vornehmbar ist.

## Claims

1. A method for operating a mobile terminal (1, 11, 19) in a mobile radio network (6), which terminal is usable in mobile radio networks (6),
wherein
at least one functional status information item of an operable mobile terminal (1) that is registered in the mobile radio network (6) with respect to the actual local position in at least one radio cell of the mobile radio network (6), which functional status information item can be predetermined by the user of the mobile terminal (1), will be collected by means of a mobile radio network (6) and be used for a transmission of communications information (17, 18, 25, 26) addressed to the mobile terminal (1) and wherein
a transmission of communications information (17, 18, 25, 26) addressed to the mobile terminal (1) is given, which transmission takes place in a filtered manner in dependence on the functional status information item of the mobile terminal (1),
**characterized in that**
the functional status information item of the mobile terminal (1) is collected by the mobile radio network (6) in connection with the registration (10) of the actual local position of the mobile terminal (1) in the at least one radio cell of the mobile radio network (6),
and that
in dependence on the functional status information item that can be predetermined by the user of the mobile terminal (1), communications information (25, 26) addressed to the mobile terminal (1) and filtered by the transmission to the mobile terminal (1) will be collected by means of the mobile radio network (6) and
in dependence on the functional status of the mobile terminal (1), communications information comprising specific contents which can be predetermined by the user of the mobile terminal (1) will be transmitted to the mobile terminal (1) correspondingly to the functional status information item that can be predetermined by the user of the mobile terminal (1), whereas in dependence on the functional status of the mobile terminal (1) other communications information that have been filtered out by the mobile radio network (6) correspondingly to the functional status information item that can be predetermined by the user of the mobile terminal (1) will, at least for the time being, i.e. as long as the functional status of the mobile terminal (1) is lasting, not be transmitted to the mobile terminal (1),
wherein the communications information comprising specific contents will be predetermined in view of an importance for the user of the mobile terminal (1) and/or in view of key words that can be predetermined or set.

2. A method according to claim 1, **characterized in that** the filtering can be adjusted.

3. A method according to claim 2, **characterized in that** the filtering can be adjusted by means of at least one filtering information item that can be selected by means of the mobile terminal (1).

4. A method according to claim 3, **characterized in that** the filtering information item will be collected by the mobile radio network (6) together with the functional status information item of the mobile terminal (1) and/or in connection with the functional status information item.

5. A method according to one of the claims 1 through 4, **characterized in that** the filtering is subject to requirements which depend on the time, the local position and/or the communications information.

6. A method according to one of the claims 1 through 5, **characterized in that** the filtering is carried out by the mobile radio network (6).

7. A method according to one of the claims 1 through 6, **characterized by** incoming calls and/or incoming messages of a message service of the mobile radio network (6) as communications information (17, 18, 25, 26).

8. A method according to claim 7, **characterized in that** the message service of the mobile radio network (6) is a short message service (SMS) or a multimedia message service (MMS).

9. A method according to claim 7, **characterized in that** the message service of the mobile radio network (6) comprises information that can be transmitted to the mobile terminal (1) by means of WAP or XHTML.

10. A method according to claim 7, **characterized in that** the message service of the mobile radio network (6) is a cell broadcast service which can be individualized according to the radio cells of the mobile radio network (6).

11. A method according to claim 9 or claim 10, **characterized in that** the message service comprises messages of different thematic categories, wherein the categories can be selected and/or predetermined by means of the mobile terminal (1).

12. A method according to one of the claims 7 through 11, **characterized in that** incoming calls and/or incoming messages of a message service of the mobile radio network (6) as communications information (18, 26) are filtered with respect to a subscriber identification (MSISDN or IMSI) of the caller and/or message sender (11, 19) in the mobile radio network (6).

13. A method according to one of the claims 1 through 12, **characterized in that** the functional status information item of the mobile terminal (1) and/or the filtering information item for the transmission of communications information (17, 18, 25, 26) addressed to the mobile terminal (1) is transmitted by the mobile terminal (1) to the mobile radio network (6) such that this one can collect it.

14. A method according to one of the claims 1 through 13, **characterized in that** the functional status information item of the mobile terminal (1) is communicated by the mobile radio network (6) to subscribers (11, 19) who address communications information (17, 25) to the mobile terminal (1).

15. A method according to one of the claims 1 through 14, **characterized in that** the functional status information item of the mobile terminal (1) is communicated by the mobile radio network (6) to subscribers (11, 19) who address communications information (17, 25) to the mobile terminal (1), if the communications information (17, 18) of these subscribers have been filtered out.

16. A method according to claim 14 or claim 15, **characterized in that** the functional status information item of the mobile terminal (1) is communicated to the respective subscriber (11) by means of a message service of the mobile radio network (6).

17. A method according to one of the claims 14 through 16, **characterized in that** the message to the subscriber (11) can be set and/or predetermined.

18. A method according to claim 17, **characterized in that** the message to the subscriber (11) can be user individually adjusted and/or predetermined by the mobile terminal (1).

19. A method according to one of the claims 14 through 18, **characterized in that** the message service of the mobile radio network (6) is a short message service (SMS) or a multimedia message service (MMS).

20. A method according to one of the claims 1 through 19, **characterized in that** the functional status information item of the mobile terminal (1) can be set by means of the mobile terminal (1).

21. A method according to claim 20, **characterized in that** the functional status information item of the mobile terminal (1) is set by actuating at least one key of the mobile terminal (1), which key is exclusively functionalized for this.

22. A method according to claim 20 or claim 21, **characterized in that** the mobile terminal (1) comprises a housing composed of at least two housing parts which can be disposed with respect to each other and the setting of the functional status information item of the mobile terminal (1) is realized by at least one relative displacement of the housing parts of the housing with respect to each other between at least two positions by pivoting, rotating and/or shifting the housing parts of the housing one to another.

23. A mobile radio system comprising components (7, 8, 9) which form a cellular mobile radio network (6) having a hierarchical cell structure, in particular according to the GSM and/or UMTS radio network standard, and comprising mobile terminals (1, 11, 19) which can be used in the mobile radio network (6), **characterized in that** the components (7, 8, 9) which form the mobile radio network (6) are adapted to carry out each single process step of a method according to one or more of the claims 1 through 22, which process steps have to be executed by the mobile radio network (6).

24. A mobile terminal (1) for the use in mobile radio networks (6), **characterized in that** this one is adapted to carry out each single process step of a method according to one or more of the claims 1 through 22 in a mobile radio system according to claim 23, which process steps have to be executed by the terminal (1).

25. A mobile terminal (1) according to claim 24, **characterized in that** this one comprises an application program which can be carried out by the mobile terminal (1) and which enables a setting of the functional status information item and/or the filtering information item.

26. A mobile terminal (1) according to claim 24 or claim 25, **characterized by** at least one key which enables to set the functional status information item when it is actuated and which is exclusively functionalized for this.

27. A mobile terminal (1) according to one of the claims 24 through 26, **characterized in that** this one comprises a housing composed of at least two housing parts which can be disposed with respect to each other, wherein the adjustment of the functional status information item can be realized by at least one relative displacement of the housing parts of the housing with respect to each other between at least two positions by pivoting, rotating and/or shifting the housing parts of the housing one to another.

## Revendications

1. Procédé d'actionnement d'un terminal mobile (1, 11, 19) dans un réseau radio mobile (6), le terminal étant utilisable dans des réseaux radio mobile (6),
dans lequel
au moins une information d'état de fonctionnement d'un terminal mobile (1) opérationnel qui est enregistré dans le réseau radio mobile (6) par rapport à la position locale actuelle dans au moins une cellule radio du réseau radio mobile (6), l'information d'état de fonctionnement étant susceptible d'être prédéterminée par l'utilisateur du terminal mobile (1), est saisie par un réseau radio mobile (6) et utilisé pour une transmission des informations de communications (17, 18, 25, 26) adressées au terminal mobile (1) et dans lequel
une transmission des informations de communications (17, 18, 25, 26) adressées au terminal mobile (1) a lieu de manière filtrée en fonction de l'information d'état de fonctionnement du terminal mobile (1),
**caractérisé en ce que**
le réseau radio mobile (6) saisit l'information d'état de fonctionnement du terminal mobile (1) en rapport avec l'enregistrement (10) de la position locale actuelle du terminal mobile (1) dans l'au moins une cellule radio du réseau radio mobile (6),
et que
le réseau radio mobile (6) saisit des informations de communications (25, 26) adressées au terminal mobile (1) et filtrées par la transmission au terminal mobile (1) en fonction de l'information d'état de fonctionnement qui est susceptible d'être prédéterminée par l'utilisateur du terminal mobile (1) et
en fonction de l'état de fonctionnement du terminal mobile (1), des informations de communications comprenant des contenus spécialisé que l'utilisateur du terminal mobile (1) peut prédéterminer sont transmises au terminal mobile (1) conformément à l'information d'état de fonctionnement qui est susceptible d'être prédéterminée par l'utilisateur du terminal mobile (1), tandis que d'autres informations de communications filtrées par le réseau radio mobile (6) en fonction de l'état de fonctionnement du terminal mobile (1) et conformément à l'information d'état de fonctionnement susceptible d'être prédéterminée par l'utilisateur du terminal mobile (1) ne sont pas transmises au terminal mobile (1), au moins initialement, c.-à-d. aussi longtemps que cet état de fonctionnement du terminal mobile (1) continue,
dans lequel les informations de communications comprenant des contenus spécialisé sont prédéterminées en vue d'une importance pour l'utilisateur du terminal mobile (1) et/ou en vue des mots-clés qu'on peut prédéterminer ou établir.

2. Procédé selon la revendication 1, **caractérisé en ce qu'**on peut régler le filtrage.

3. Procédé selon la revendication 2, **caractérisé en ce qu'**on peut régler le filtrage par moyen d'au moins une information de filtrage qu'on peut sélectionner par moyen du terminal mobile (1).

4. Procédé selon la revendication 3, **caractérisé en ce que** le réseau radio mobile (6) saisit l'information de filtrage ensemble avec l'information d'état de fonctionnement du terminal mobile (1) et/ou dans le contexte de l'information d'état de fonctionnement du terminal mobile (1).

5. Procédé selon l'une des revendications 1 à 4, **caractérisé en ce que** le filtrage est soumis à des conditions en fonction du temps, de la position locale et/ou des informations de communications.

6. Procédé selon l'une des revendications 1 à 5, **caractérisé en ce que** c'est le réseau radio mobile (6) qui effectue le filtrage.

7. Procédé selon l'une des revendications 1 à 6, **caractérisé par** des appels entrants et/ou des messages entrants d'un service de messages du réseau radio mobile (6) en tant que informations de communications (17, 18, 25, 26).

8. Procédé selon la revendication 7, **caractérisé en ce que** le service de messages du réseau radio mobile (6) est un service de messages courts (SMS) ou un service de messages multimédia (MMS).

9. Procédé selon la revendication 7, **caractérisé en ce que** le service de messages du réseau radio mobile (6) comprend des informations susceptibles d'être transmises au terminal mobile (1) par moyen de WAP ou de XHTML.

10. Procédé selon la revendication 7, **caractérisé en ce que** le service de messages du réseau radio mobile (6) est un service « cellbroadcast » qu'on peut individualiser selon des cellules radio du réseau radio mobile (6).

11. Procédé selon la revendication 9 ou la revendication 10, **caractérisé en ce que** le service de messages comprend des messages dans des catégories thématiques différentes, les catégories étant sélectionnables et/ou pré-déterminables par moyen du terminal mobile (1).

12. Procédé selon l'une des revendications 7 à 11, **caractérisé en ce que** des appels entrants et/ou des messages entrants d'un service de messages du réseau radio mobile (6) en tant que informations de communications (18, 26) sont filtrés par rapport à une identification d'abonné (MSISDN ou IMSI) de l'appelant et/ou de l'émetteur de messages (11, 19) dans le réseau radio mobile (6).

13. Procédé selon l'une des revendications 1 à 12, **caractérisé en ce que** l'information d'état de fonctionnement du terminal mobile (1) et/ou l'information de filtrage pour la transmission des informations de communications (17, 18, 25, 26) adressées au terminal mobile (1) est transmise par le terminal mobile (1) au réseau radio mobile (6) de sorte que celui-ci peut la saisir.

14. Procédé selon l'une des revendications 1 à 13, **caractérisé en ce que** le réseau radio mobile (6) communique l'information d'état de fonctionnement du terminal mobile (1) à des abonnés (11, 19) qui adressent des informations de communications (17, 25) au terminal mobile (1).

15. Procédé selon l'une des revendications 1 à 14, **caractérisé en ce que** le réseau radio mobile (6) communique l'information d'état de fonctionnement du terminal mobile (1) à des abonnés (11, 19) qui adressent des informations de communications (17, 25) au terminal mobile (1), si les informations de communications (17, 18) des ces abonnés ont été filtrées.

16. Procédé selon la revendication 14 ou la revendication 15, **caractérisé en ce qu'**un service de messages du réseau radio mobile (6) communique l'information d'état de fonctionnement du terminal mobile (1) à l'abonné respectif (11).

17. Procédé selon l'une des revendications 14 à 16, **caractérisé en ce qu'**on peut fixer et/ou prédéterminer le message à l'abonné (11).

18. Procédé selon la revendication 17, **caractérisé en ce qu'**on peut établir et/ou prédéterminer le message à l'abonné (11) de façon individuelle par rapport à l'utilisateur par moyen du terminal mobile (1).

19. Procédé selon l'une des revendications 14 à 18, **caractérisé en ce que** le service de messages du réseau radio mobile (6) est un service de messages courts (SMS) ou un service de messages multimédia (MMS).

20. Procédé selon l'une des revendications 1 à 19, **caractérisé en ce qu'**on peut fixer l'information d'état de fonctionnement du terminal mobile (1) par moyen du terminal mobile (1).

21. Procédé selon la revendication 20, **caractérisé en ce que** l'information d'état de fonctionnement du terminal mobile (1) est fixée par l'actionnement d'au moins une touche du terminal mobile (1) laquelle est exclusivement fonctionnalisée pour cela.

22. Procédé selon la revendication 20 ou la revendication 21, **caractérisé en ce que** le terminal mobile (1) comprend un boîtier composé d'au moins deux éléments de boîtier qu'on peut disposer l'un par rapport à l'autre et qu'on fixe l'information d'état de fonctionnement du terminal mobile (1) par au moins un déplacement relatif des éléments de boîtier l'un par rapport à l'autre entre au moins deux positions en pivotant, en tournant et/ou en déplaçant les éléments de boîtier l'un par rapport à l'autre.

23. Système radio mobile comprenant des composants (7, 8, 9) qui forment un réseau radio mobile (6) cellulaire ayant une structure cellulaire hiérarchique, notamment selon le standard radio mobile de GSM et/ou de UMTS et comprenant des terminaux mobiles (1, 11, 19) utilisables dans le réseau radio mobile (6), **caractérisé en ce que** les composants (7, 8, 9) qui forment le réseau radio mobile (6) sont configurés pour effectuer chaque étape d'un procédé selon l'une ou plusieurs des revendications 1 à 22, les étapes de procédé étant réalisables par le réseau radio mobile (6).

24. Terminal mobile (1) destiné à l'utilisation dans des réseaux radio mobiles (6), **caractérisé en ce que** celui-ci est adapté à effectuer chaque étape d'un procédé selon l'une ou plusieurs des revendications 1 à 22 dans un système radio mobile selon la revendication 23, les étapes de procédé étant réalisables par le terminal (1).

25. Terminal mobile (1) selon la revendication 24, **caractérisé en ce que** celui-ci comprend un programme d'application qui est susceptible d'être exécuté par le terminal mobile (1) et qui permet de fixer l'information d'état de fonctionnement et/ou de l'information de filtrage.

26. Terminal mobile (1) selon la revendication 24 ou la revendication 25, **caractérisé par** au moins une touche qui permet de fixer l'information d'état de fonctionnement quand elle est actionnée et qui est exclusivement fonctionnalisée pour cela.

27. Terminal mobile (1) selon l'une des revendications 24 à 26, **caractérisé en ce que** celui-ci comprend un boîtier composé d'au moins deux éléments de boîtier qu'on peut disposer l'un par rapport à l'autre et qu'on fixe l'information d'état de fonctionnement du terminal mobile (1) par au moins un déplacement relatif des éléments de boîtier l'un par rapport à l'autre entre au moins deux positions en pivotant, en tournant et/ou en déplaçant les éléments de boîtier l'un par rapport à l'autre.
